# EUROPÄISCHE PATENTSCHRIFT

(11) **EP 3 834 220 B1**
(45) Veröffentlichungstag und Bekanntmachung des Hinweises auf die Patenterteilung: **05.11.2025**
(21) Anmeldenummer: 19769079.5
(22) Anmeldetag: 04.09.2019
(51) Int. Cl.: H01H 9/16, H02B 13/035, H02J 13/00

(54) **ELEKTROENERGIEÜBERTRAGUNGSEINRICHTUNG**
ELECTRICAL POWER TRANSMISSION DEVICE
DISPOSITIF DE TRANSFERT D'ÉNERGIE ÉLECTRIQUE

(30) Priorität: 01.10.2018 DE 102018216849
(43) Veröffentlichungstag der Anmeldung: 16.06.2021
(73) Patentinhaber: Siemens Energy Global GmbH & Co. KG, 81739 München (DE)
(72) Erfinder: ANDREE, Hendrik, 97514 Oberaurach/Dankenfeld (DE); HEINECKE, Matthias, 14163 Berlin (DE); LEHMANN, Thomas, 13583 Berlin (DE); ZAEDOW, Benjamin, 13189 Berlin (DE)
(86) Internationale Anmeldenummer: PCT/EP2019/073549
(87) Internationale Veröffentlichungsnummer: WO 2020/069808

(56) Entgegenhaltungen:
- EP-A1- 3 001 204
- EP-A1- 3 279 027
- EP-B1- 3 279 027
- DE-A1- 102016 202 853
- FRAUNHOFER-GESELLSCHAFT ET AL: "Sensorsystem mit energieautarken Sensormodulen durch Energy Harvesting zum Überwachen der Betriebsparameter (Condition Monitoring) von Hochspannungsfreileitungen", DUISBURG, GERMANY, 28 August 2019 (2019-08-28), XP055644739, Retrieved from the Internet <URL:https://www.ims.fraunhofer.de/de/Geschaeftsfelder/Wireless-Transponder-Systems/Anwendungen/Ueberwachung-Freileitungen.html> [retrieved on 20191120]

## Beschreibung

Die Erfindung bezieht sich auf ein Schaltgerät mit einer Schaltstelle sowie einem Sensor zur Zustandsüberwachung des Schaltgerätes.

Eine Elektroenergieübertragungseinrichtung dient der Übertragung elektrischer Energie. Teil einer Elektroenergieübertragungseinrichtung ist ein Schaltgerät, welches zumindest eine Kontaktierungsarmatur aufweist, um das Schaltgerät anzuschließen. Weiterhin weist die Elektroenergieübertragungseinrichtung einen Sensor zur Zustandsüberwachung des Schaltgerätes auf.

Bei bekannten Einrichtungen werden kostenintensive Sensoren eingesetzt, die über Algorithmen eine Fehlerkorrektur der vom Sensor gelieferten Daten vornehmen. Dies hat zur Folge, dass eine erhöhte Rechenleistung zur Verfügung gestellt werden muss, welche mit Energie zu versorgen ist. Neben einem erhöhten Energiekonsum wird oft zusätzlicher Bauraum benötigt.

Der europäischen Patentanmeldung EP 3 001 204 A1 ist eine Vorrichtung zur Durchführung wenigstens eines elektrischen Leiters durch eine Öffnung entnehmbar. Die dortige Vorrichtung umfasst ein Gehäuse, das einen Hohlraum zur Aufnahme des wenigstens einen elektrischen Leiters umgibt. In dem Gehäuse ist ein Stromsensor integriert. Der Offenlegungsschrift DE 10 2016 202 853 A1 ist ein Hochspannungsleistungsschalter entnehmbar. Zur Energieversorgung des Hochspannungsleistungsschalters ist dort vorgesehen, eine Einrichtung zum Erzeugen von elektrischer Energie direkt am Leistungsschalter anzuordnen. Dazu ist vorgeschlagen, an einem Traggestell des Leistungsschalters Windenergiegeneratoren oder Solarmodule ergänzend zu einem Steuerschrankgehäuse anzuordnen. Der europäischen Patentanmeldung EP 3 279 027 A1 ist eine Anordnung mit einer Netzwerkvorrichtung zur Befestigung an einem Fahrdraht einer stromdurchflossenen Oberleitung entnehmbar. Betriebs- bzw. Zustandsparameter der Oberleitung, bzw. eines zugeordneten Schienenweges oder einer zugeordneten Straße, können über die Netzwerkvorrichtung erfasst und weitergeleitet werden. Ein dazu vorgesehener Transceiver ist mit einer induktiven Energiegewinnungseinrichtung verbunden. Der Veröffentlichung der Fraunhofer-Gesellschaft: "Sensorsystem mit energieautarken Sensormodulen durch Energy Harvesting zur Überwachung der Betriebsparameter (Condition Monitoring) von Hochspannungsfreileitungen" Duisburg, Germany, 28. August 2019, XP 055644739, ist die Ausstattung von Hochspannungsfreileitungen mit Sensormodulen entnehmbar, die in periodischen Abständen direkt an den Leiterseilen einer Freileitung installiert werden. Dabei ist ein autarker Betrieb der Sensoren vorgesehen, welche Energie mittels Energy Harvesting aus dem Strom der Leiterseile beziehen.

Daher ergibt sich als Aufgabe der Erfindung, ein Schaltgerät mit Sensor anzugeben, welches bei kostengünstiger Ausgestaltung des Sensors einen zuverlässigen und langfristigen Betrieb des Sensors ermöglicht.

Erfindungsgemäß wird die Aufgabe bei einem Schaltgerät der eingangs genannten Art dadurch gelöst, dass das Schaltgerät eine einen Zugang zu der Schaltstelle des Schaltgerätes ermöglichende Kontaktierungsarmatur aufweist, die Konataktierungsarmatur mit der Schaltstelle elektrisch kontaktiert und Teil eines zu schaltenden Strompfades ist und der Sensor von der Kontaktierungsarmatur getragen ist, wobei der Sensor auf einer Fläche der Kontaktierungsarmatur aufliegt und mit dieser in thermischer Verbindung steht.

Mittels einer Elektroenergieübertragungseinrichtung wird elektrische Energie übertragen. Dazu weist die Elektroenergieübertragungseinrichtung ein Schaltgerät auf. Das Schaltgerät dient dazu, eine Impedanz einer Schaltstelle eines Strompfades zu verändern. Beispielsweise kann das Schaltgerät zur Ausbildung einer Schaltstelle relativ zueinander bewegbare Schaltkontaktstücke aufweisen, die aufgrund einer Relativbewegung der Schaltkontaktstücke zueinander eine Impedanzveränderung bewirken. Es kann jedoch auch vorgesehen sein, dass beispielsweise unter Nutzung eines halbleitenden Elementes eine Potentialänderung vorgenommen wird. Elektroenergieübertragungseinrichtungen arbeiten insbesondere im Mittel- und Hochspannungsbereich, d. h. bei Bemessungsspannungen von mehreren 1.000 V bis hin zu mehreren 100.000 V, z. B. über 1 000 000 V. Um das Schaltgerät in einen Phasenleiterzug einbinden zu können, ist das Schaltgerät zumindest mit einer Kontaktierungsarmatur verbunden. Über die Kontaktierungsarmatur ist ein Zugang zum impedanzveränderlichen Strompfad (Schaltstelle) des Schaltgerätes ermöglicht. So ist es möglich, den Phasenleiterzug, welcher mit der Kontaktierungsarmatur verbunden ist, elektrisch kontaktiert am Schaltgerät anliegen zu lassen. Bevorzugt können mehrere Kontaktierungsarmaturen vorgesehen sein, insbesondere um beispielsweise beiderseits einer Schaltstelle des Schaltgerätes den Phasenleiterzug anschließen zu können. Eine Kontaktierungsarmatur kann beispielsweise auch dazu dienen, zwei Schaltstellen eines Schaltgerätes miteinander elektrisch leitend zu verbinden (beispielsweise in Reihe). Eine Kontaktierungsarmatur kann beispielsweise auch Teil einer Tragkonstruktion des Schaltgerätes sein. Die Kontaktierungsarmatur kann beispielsweise auch ein Verteilgehäuse oder ein Getriebegehäuse bilden, welches einerseits einer Übertragung einer Antriebsbewegung dient und andererseits eine elektrisch leitende Kontaktierungsarmatur bildet. Eine Kontaktierungsarmatur ist Teil des zu schaltenden Strompfades. Schaltgeräte sind beispielsweise Trennschalter, Leistungsschalter, Lastschalter, Erdungsschalter, Schnellerdungsschalter oder auch Überspannungsableiter, die beispielsweise auf Basis einer Pegelfunkenstrecke oder eines spannungsabhängigen Widerstandselementes eine Schutzfunktion, z. B. gegen Erdpotential übernehmen. Die Kontaktierungsarmatur kann beispielsweise lösbar mit dem Schaltgerät verbunden sein. Die Kontaktierungsarmatur weist dabei im Regelfall eine hohe elektrische Leitfähigkeit auf, um eine impedanzarme Einbindung des Schaltgerätes zu ermöglichen. Die Kontaktierungsarmatur kann dabei bevorzugt der Positionierung eines Sensors dienen. Der Sensor kann von der Kontaktierungsarmatur getragen werden. Entsprechend ist der Sensor einerseits in der Nähe der Schaltstelle und damit im Regelfall in der Nähe eines kritischen Bereiches eines Schaltgerätes angeordnet, jedoch so weit entfernt von der Schaltstelle, dass die Funktion des Sensors beispielsweise durch ein Schalten der Schaltstelle z. B. durch mechanische Schwingungen nicht beeinflusst wird. Weiter weist eine derartige Montage des Sensors den Vorteil auf, dass auch eine Nachrüstung vorgenommen werden kann. Der Sensor kann beispielsweise auf einer Fläche der Kontaktierungsarmatur aufliegen und mit dieser in thermischer Verbindung stehen. Insbesondere bei der Verwendung von Sensoren, die einer Erfassung einer Temperatur der Kontaktierungsarmatur dienen, ist eine derartige thermische Kontaktierung von Sensor und Kontaktierungsarmatur von Vorteil, da so thermische Übergänge zwischen Sensor und Kontaktierungsarmatur reduziert werden. Neben der Messung einer Temperatur kann der Sensor zusätzlich oder alternativ auch weitere physikalische Größen messen. So kann beispielsweise ein elektrischer Strom, eine elektrische Spannung, eine Kraft, beispielsweise ausgehend von einer Windlast, eine Dehnung, weitere Impulse, Luftfeuchtigkeit, Helligkeit, Bewegungen, Lageänderungen usw. dienen.

Eine weitere vorteilhafte Ausgestaltung kann vorsehen, dass der Sensor durch die Kontaktierungsarmatur zumindest teilweise abgeschattet ist.

Der Sensor ist von der Kontaktierungsarmatur getragen. Dabei ist vorteilhaft vorsehbar, dass die Kontaktierungsarmatur den Sensor zumindest teilweise abschattet. Das heißt zumindest zeit- oder abschnittsweise ist ein unmittelbarer Zugang zu dem Sensor, zumindest aus einer Richtung durch die Kontaktierungsarmatur verwehrt. Vorteilhaft kann dabei vorgesehen sein, dass der Sensor vollständig von der Kontaktierungsarmatur abgeschattet ist. Die Kontaktierungsarmatur kann einen mechanischen Schutz für den Sensor ausbilden. Alternativ oder zusätzlich kann eine zumindest teilweise dielektrische Abschattung des Sensors durch die Kontaktierungsarmatur erfolgen. Ein Sensor kann beispielsweise in zumindest teilweise durch die Kontaktierungsarmatur geschirmten Bereichen an der Kontaktierungsarmatur angeordnet sein. Dazu kann die Kontaktierungsarmatur beispielsweise Nischen, eingeschlossene Winkel usw. aufweisen.

Eine weitere vorteilhafte Ausgestaltung kann vorsehen, dass der Sensor mit einer Anlagefläche an der Kontaktierungsarmatur anliegt und mit einer von der Anlagefläche abgewandten Fläche in Richtung eines Erdpotentiales fort ragt.

Ein Anliegen einer Anlagefläche an der Kontaktierungsarmatur ermöglicht es insbesondere bei der Messung einer Temperatur einen geeigneten Temperaturübergang zwischen Kontaktierungsarmatur und Sensor, insbesondere seiner Anlagefläche. Des Weiteren kann durch eine Ausrichtung der von der Anlagefläche abgewandten Fläche des Sensors in Richtung Erdpotential die dielektrischen Auswirkungen des Sensors an der Kontaktierungsarmatur reduziert werden. Vorteilhaft kann dies im Zusammenwirken mit einer dielektrischen Abschattung des Sensors durch die Kontaktierungsarmatur erfolgen. Ein Erdpotential bildet ein neutrales Potential an einer Elektroenergieübertragungseinrichtung. Insbesondere elektrische Felder bzw. der Verlauf der elektrischen Felder in Richtung eines Erdpotentials kann hinsichtlich der Ausrichtung des Sensors als unkritischer angesehen werden als bei einer Ausrichtung zu einem Hochspannungspotential. Durch einen derart ausgerichteten Sensor ist einem Stören der Feldverteilung an einer Elektroenergieübertragungseinrichtung entgegengewirkt. Ein Erdpotential kann beispielsweise auch durch einen Mast gebildet werden.

Es besteht die Möglichkeit, einen Sensor auch an bestehenden Kontaktierungsarmaturen nachzurüsten, indem dieser beispielsweise unter Nutzung einer Klebeverbindung oder einer Schraubverbindung an der bestehenden Kontaktierungsarmatur angebracht wird, so dass dieser von der Kontaktierungsarmatur getragen wird. Der im Regelfalle dielektrisch beeinflussend wirkende Sensor kann in Richtung eines Erdpotentials von der Kontaktierungsarmatur fortragen.

Eine weitere vorteilhafte Ausgestaltung kann vorsehen, dass der Sensor ein energieautarker Sensor ist.

Die Kontaktierungsarmatur kann je nach Schaltzustand der Schalteinrichtung verschiedene elektrische Potentiale führen. Damit ist es je nach Größe des elektrischen Potentials schwierig bis unmöglich, beispielsweise drahtgebunden elektrische Energie zum Betrieb des Sensors zu dem Sensor zu leiten. Bei einem energieautarken Sensor ist eine separate Elektroenergieversorgung von außen nicht nötig. Vielmehr weist der Sensor beispielsweise einen Energiespeicher, z. B. einen Akkumulator oder eine Batterie auf. Des Weiteren kann der Sensor einen Generator aufweisen, welcher, getrieben durch in der Umgebung vorhandene Energie, die zum Betrieb des Sensors notwendige Energie bereitstellt. Insbesondere kann ein energieautarker Sensor Energie aus den in einer Elektroenergieübertragungseinrichtung vorliegenden Strömen und Spannungen auskoppeln. Alternativ können auch weitere Quellen in der Umgebung des Sensors genutzt werden. Beispielsweise kann der Sensor eine Anlagefläche aufweisen, an welcher die zu überwachende physikalische Größe, insbesondere hier eine Temperatur in den Sensor eigekoppelt wird, andererseits kann der Sensor eine Kühlfläche aufweisen, die einer Abgabe thermischer Energie dient. Aus der Temperaturdifferenz der Anlagefläche sowie der Kühlfläche kann ein Generator eine elektrische Energie erzeugen, um den Sensor zu betreiben.

Eine weitere vorteilhafte Ausgestaltung kann vorsehen, dass der Sensor eine drahtlose Abstrahleinheit aufweist, deren Strahlrichtung in Richtung eines Erdpotentials zeigt.

Durch die Nutzung einer drahtlosen Abstrahleinheit kann insbesondere in Kombination mit der Ausbildung des Sensors als energieautarker Sensor der Sensor auch auf Hochspannungspotential eingesetzt werden und dort arbeiten. Zur Übertragung von Informationen weist der Sensor eine drahtlose Abstrahleinheit auf, die in Strahlrichtung Informationen von dem Sensor zu einer Empfangseinrichtung überträgt. Die Strahlrichtung sollte dabei bevorzugt in Richtung eines Erdpotentials zeigen, so dass dort bevorzugt auf Erdpotential eine Empfangseinrichtung angeordnet werden kann. Damit ist es möglich, über Potentialdifferenzen hinweg am elektrischen Schaltgerät Informationen über den Sensor auszukoppeln und an eine Empfangseinrichtung zu übertragen. Die Empfangseinrichtung kann beispielsweise an einem Mast angeordnet sein. Dort empfangene Informationen können gegebenenfalls weiterleitet werden. Dazu kann sich beispielsweise einer Richtfunkstrecke bedient werden.

Eine weitere vorteilhafte Ausgestaltung kann vorsehen, dass der Sensor seitlich an einer Kontaktierungsarmatur angeordnet ist.

Eine Kontaktierungsarmatur kann in einer vertikalen Richtung eine Aufnahme für den Sensor aufweisen, an welchen beispielsweise die Anlagefläche des Sensors anliegt. So ist der Sensor seitlich an der Kontaktierungsarmatur angeordnet, wobei beispielsweise zur Aufnahme von Kontaktierungsbolzen diese im Wesentlichen lotrecht oder parallel zur Fläche liegen, an welcher der Sensor seitlich an einer Kontaktierungsarmatur angeordnet ist. Insbesondere bei einer Orientierung einer Schaltstelle eines Schaltgerätes in einer Horizontalen kann stirnseitig eine Kontaktierungsarmatur angeordnet sein und auch stirnseitig der Sensor positioniert werden. Durch ein Überragen des Sensors durch die Kontaktierungsarmatur kann eine Abschattung des Sensors erfolgen.

Eine weitere vorteilhafte Ausgestaltung kann vorsehen, dass das Schaltgerät ein Freiluftschaltgerät ist.

Ein Freiluftschaltgerät ist ein Schaltgerät, welches aufgrund seiner Ausgestaltung den Witterungseinflüssen der Freiluft standhält. Beispielsweise kann das Schaltgerät mit einem elektrisch isolierenden Gehäuse ausgestattet sein, das beispielsweise eine Verrippung trägt, um einem Ausbilden von Kriechstrompfaden entgegen zu wirken. Ein Freiluftschaltgerät kann beispielsweise in einer horizontalen Ausrichtung verlaufen. Ein Freiluftschaltgerät kann jedoch auch säulenförmig in einer Vertikalen verlaufen. Die Ausrichtung in einer Horizontalen bzw. Vertikalen bezieht sich dabei im Wesentlichen auf die Lage der Kontaktierungsarmaturen zueinander. Insbesondere bei säulenförmigen vertikalen Ausgestaltungen des Schaltgerätes kann der Sensor überspannt von einer Kontaktierungsarmatur unterhalb derselben angeordnet sein. In diesem Falle sind Anschlussbolzen, welche dem Kontaktieren der Kontaktierungsarmatur dienen, bevorzugt in Richtung einer Vertikalen ausgerichtet. Ein Freiluftschaltgerät in horizontaler Ausrichtung positioniert den Sensor bevorzugt stirnseitig oder zwischen mehreren Schaltstellen.

Eine weitere vorteilhafte Ausgestaltung kann vorsehen, dass der Sensor von einer Freileitung überspannt ist, welche an der Kontaktierungsarmatur angeschlagen ist.

Bei der Nutzung von Freiluftschaltgeräten können Freileitungen verwendet werden, die an der Kontaktierungsarmatur angeschlagen sind. Freileitungen sind beispielsweise mittels Bolzen mit der Kontaktierungsarmatur verbunden, wobei die Bolzen bevorzugt im Wesentlichen lotrecht zu der Fläche ausgerichtet sind, an welcher der Sensor an der Kontaktierungsarmatur angeschlagen ist. Bevorzugt kann der Sensor dabei von den Freileitungen überspannt sein, insbesondere kann der Sensor von der Kontaktierungsarmatur selbst überspannt sein. Ein Überspannen kann beispielweise durch ein Überdecken des Sensors z.B. mit der Freileitung und/ oder der Kontaktierungsarmatur erfolgen. So ist ein zumindest teilweiser mechanischer Schutz für den Sensor gegeben. Dadurch kann weiterhin ein Schutz des Sensors vor Verwitterung gegeben sein. Es kann jedoch auch vorgesehen sein, dass das Freiluftschaltgerät beispielsweise eine zwischen einer Vertikalen und einer Horizontalen liegende schräge Ausrichtungen der Kontaktierungsarmatur vorsieht. Dies ist beispielsweise bei der Verwendung von Schaltgeräten in so genannter Dead-Tank-Bauweise möglich, bei welchen eine Schaltstelle innerhalb eines elektrisch leitenden Kapselungsgehäuses angeordnet ist, wobei zu einer Einbindung des elektrischen Schaltgerätes in einen Phasenleiterzug Freiluftdurchführungen eingesetzt sind, die beispielsweise schräg am elektrisch leitenden Gehäuse angeschlagen sind. Der Sensor kann teilweise bzw. abschnittsweise von den Freileitungen und/oder von der Kontaktierungsarmatur überspannt sein.

Eine weitere vorteilhafte Ausgestaltung kann vorsehen, dass der Sensor von der Kontaktierungsarmatur zumindest teilweise überspannt ist.

Alternativ oder zusätzlich zu einer Überspannung des Sensors durch eine Freileitung kann der Sensor auch von der Kontaktierungsarmatur selbst zumindest teilweise überspannt/ abgeschrankt sein. Hier kann die Kontaktierungsarmatur zusätzlich zu ihrer elektrischen Eigenschaft eine mechanische Schutzfunktion für den Sensor wahrnehmen.

Vorteilhafterweise kann weiter vorgesehen sein, dass der Sensor eine thermisch reflektierende Oberflächengestalt aufweist.

Bei einer Freiluftaufstellung eines Sensors bzw. der Elektroenergieübertragungseinrichtung ist der Sensor verschiedenen äußeren Einflüssen, insbesondere einer Bewitterung ausgesetzt. Die Nutzung einer reflektierenden Oberflächengestalt für den Sensor ermöglicht es, dynamische Belastungen des Sensors durch äußere Einflüsse, beispielsweise durch Sonneneinstrahlung zu reduzieren. Der Sensor kann dazu eine entsprechende Farbgebung aufweisen. Der Sensor kann beispielsweise eine Beschichtung, z. B. einen Lack, aufweisen. Die Beschichtung sollte einen hohen Wärmestrahlungskoeffizienten aufweisen. So kann ein Messfehler reduziert werden. Weiterhin ist die Neigung zur Erwärmung reduziert. Der Sensor kann jedoch auch eine entsprechende Struktur seiner Oberflächengestalt aufweisen. Z. B kann der Sensor mit Rippen versehen sein, die beispielsweise eine kühlende Funktion haben und auch einander Beschatten können.

Weiter kann vorteilhaft vorgesehen sein, dass der Sensor stirnseitig an einem Schaltgerät angeordnet ist.

Eine stirnseitige Positionierung nutzt eine Gehäuseendseite aus um die Kontaktierungsarmatur nebst Sensor anzuordnen. Dies ermöglicht eine einfache Ausrichtung des Sensors in Richtung eines Erdpotentials. So werden elektrische Felder um das elektrische Schaltgerät nur gering beeinflusst. Weiterhin braucht nicht in die Gehäusestruktur des elektrischen Schaltgerätes eingegriffen zu werden.

Ein Schaltgerät kann eine Stirnseite aufweisen, an welcher der Sensor angeordnet ist. Dazu ist die Stirnseite des Schaltgerätes mit einer Kontaktierungsarmatur versehen, über welche der Sensor am Schaltgerät abgestützt ist. Bevorzugt kann eine Stirnseite an einem isolierenden Gehäuse bzw. elektrisch isolierenden Gehäuseabschnitt des Schaltgerätes angeordnet sein. Beispielsweise kann es sich bei dem Gehäuse um ein im Wesentlichen rotationssymmetrisches Hohlgehäuse wie einen Hohlzylinder, einen Hohlkegel, einen Hohlkegelstumpf usw. handeln. An der Stirnseite kann ein Anschlagpunkt, insbesondere durch die Kontaktierungsarmatur bereitgestellt, angeordnet sein, um das Schaltgerät in einen Phasenleiterzug einzubinden. Je nach Montagelage kann eine Stirnseite des Schaltgerätes in einer Horizontalen, einer Vertikalen oder einer Schrägen positioniert sein. Zur Bildung einer Stirnseite kann das Schaltgerät einen einseitig gehaltenen, elektrisch Isolierenden Abschnitt aufweisen, der frei in Richtung der Stirnseite ragt. Dabei ist das frei in Richtung der Stirnseite ragende Gehäuse bevorzugt elektrisch isolierend auszuführen. So kann beispielsweise an einer Freiluftdurchführung mit elektrisch isolierendem Gehäuse, an einer Schaltstelle mit elektrisch isolierendem Gehäuse usw. eine Stirnseite ausgebildet sein, die im Wesentlichen lotrecht zur Längsachse des die Stirnseite aufweisenden Elementes, beispielsweise eines Isoliergehäuses, ausgerichtet ist. Das Isoliergehäuse kann einen Teil einer elektrisch isolierenden Barriere ausbilden. Die elektrisch Isolierende Barriere kann einen Fluidaufnahmeraum begrenzen. Im Fluidaufnahmeraum kann eine elektrisch isolierendes Fluid (insbesondere gasförmig) eingeschlossen sein und im Inneren des Fluidaufnahmeraumes angeordnete Phasenleiter umspülen und elektrisch isolieren. Im Fluidaufnahmeraum kann insbesondere eine Schaltstelle des Schaltgerätes angeordnet sein. Das Fluid kann unter einen Überdruck gesetzt werden, so dass dessen elektrisch isolierenden Eigenschaften verbessert werden. Bei dem Schaltgerät kann es sich um ein druckfluidisoliertes, insbesondere druckgasisoliertes Schaltgerät handeln.

Im Folgenden wird ein Ausführungsbeispiel der Erfindung schematisch in einer Zeichnung gezeigt und nachfolgend näher beschrieben. Dabei zeigt die
- Figur 1:: eine Elektroenergieübertragungseinrichtung mit einem vertikalen Schaltgerät, die
- Figur 2:: eine Elektroenergieübertragungseinrichtung mit einem horizontalen Schaltgerät, die
- Figur 3:: eine Elektroenergieübertragungseinrichtung mit einem Schaltgerät in Dead-Tank-Bauweise, die
- Figur 4:: eine Kontaktierungsarmatur, in einer ersten perspektivischen Ansicht, die
- Figur 5:: die aus der Figur 4 bekannte Kontaktierungsarmatur in einer zweiten perspektivischen Ansicht, die
- Figur 6:: eine Kontaktierungsarmatur in einer ersten Abwandlung, die
- Figur 7:: eine Kontaktierungsarmatur in einer zweiten Abwandlung sowie die
- Figuren 8, 9 und 10: eine Kontaktierungsarmatur in einer dritten Abwandlung.

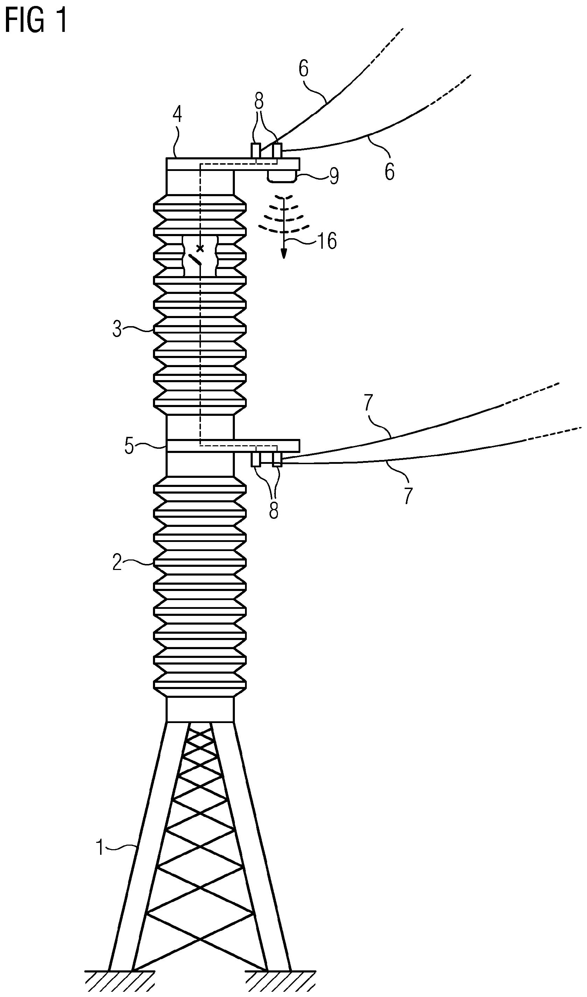

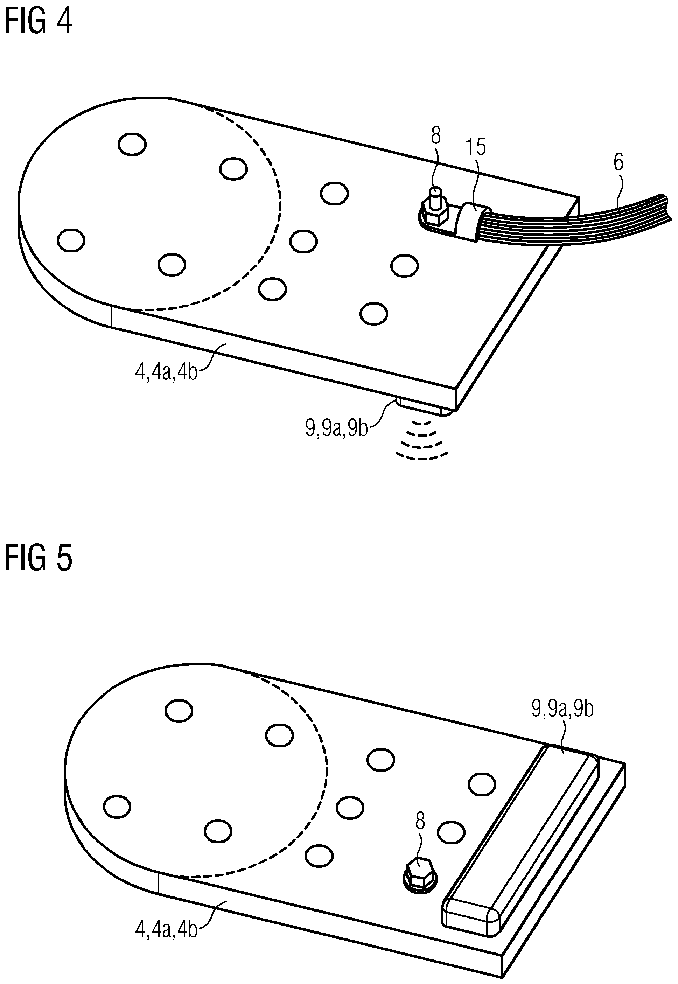

In den Figuren 1, 2 und 3 ist jeweils die Montagemöglichkeit eines Sensors an einem Schaltgerät gezeigt. Die Figuren 4 und 5 zeigen darüber hinaus eine Montagemöglichkeit der Anordnung eines Sensors an einer Kontaktierungsarmatur.

Die Figuren 1 bis 3 zeigen jeweils Schaltgeräte, die relativ zueinander bewegbare Schaltkontaktstücke aufweisen und durch eine Relativbewegung der Schaltkontaktstücke eine Schalthandlung (Impedanzänderung eines Strompfades) vollziehen können. Darüber hinaus ist die Erfindung auch an weiteren Schaltgeräten, die beispielsweise unter Nutzung eines Halbleiters zur Impedanzänderung arbeiten verwendbar. Weiterhin ist als Schaltgerät bspw. auch ein sogenannter Überspannungsableiter zu verstehen, welcher ein spannungsabhängiges Widerstandelement aufweist und welcher spannungsabhängig ein Schalten, das heißt, einen Impedanzwechsel des spannungsabhängigen Widerstandselementes vornimmt.

Das in der Figur 1 gezeigte vertikale Schaltgerät weist ein Traggestell 1 auf. Über das Traggestell 1 ist das vertikale Schaltgerät positioniert. Das vertikale Schaltgerät weist eine Stützisolator 2 auf, auf welcher eine Schaltstelle 3 des vertikalen Schaltgerätes elektrisch Isoliert abgestützt ist. Der Stützisolator 2 ist im Wesentlichen hohlzylindrisch ausgebildet und endseitig einerseits mit dem Traggestell 1 und andererseits mit der Schaltstelle 3 verbunden. Die Schaltstelle 3 weist ein Isoliergehäuse auf, in dessen Inneren relativ zueinander bewegbare Schaltkontaktstücke des vertikalen Schaltgerätes positioniert sind. An den Endseiten der Schaltstelle 3 ist das Isoliergehäuse fluiddicht abgeschlossen, wobei durch den fluiddichten Verbund hindurch ein elektrisches Kontaktieren der im Inneren des Isoliergehäuses befindlichen Schaltkontaktstücke vorgenommen werden kann. Die Hohlachse des Isoliergehäuses ist im Wesentlichen vertikal ausgerichtet. Entsprechend ist in der Figur 1 ein Single-Line-Diagramm angedeutet. Stirnseitig an den Endseiten des Isoliergehäuses der Schaltstelle 3 sind eine erste Kontaktierungsarmatur 4 sowie eine zweite Kontaktierungsarmatur 5 angeordnet. Die beiden Kontaktierungsarmaturen 4, 5 sind längs einer Vertikalen beabstandet voneinander angeordnet. Die beiden Kontaktierungsarmaturen 4, 5 sind im Wesentlichen gleichartig aufgebaut. Die Kontaktierungsarmaturen 4, 5 dienen einem Anschlagen von Freileitungen 6, 7. Über die Freileitungen 6, 7 ist das vertikale Schaltgerät nach Figur 1 in ein Elektroenergieübertragungsnetz einbindbar, wobei zwischen den Freileitungen 6, 7 die Schaltstelle 3 des vertikalen Schaltgerätes angeordnet ist. Vorliegend sind die Freileitungen 6, 7 jeweils zweiadrig ausgebildet, so dass ein Stromfluss über die Freileitungen 6, 7 sich jeweils auf zwei Adern der jeweiligen Freileitung 6, 7 aufteilt. Zum Kontaktieren der Freileitung 6, 7 mit der jeweiligen Kontaktierungsarmatur 4, 5 sind jeweils Bolzen 8 vorgesehen, an welche beispielsweise mittels Kabelschuhen die Freileitungen 6, 7 angeschlossen werden können (vgl. Darstellungen der Figur 4).

Im Betrieb eines Schaltgerätes kommt es aufgrund eines Stromflusses über die geschlossene Schaltstelle 3 bzw. über die Freileitungen 6, 7 und die Kontaktierungsarmaturen 4, 5 zu einer Erwärmung. Weiterhin kann thermische Energie auch von außen in das System eingebracht werden. Je nach Umgebungstemperatur, insbesondere bei Vorsehen einer wie in der Figur 1 gezeigten Freiluftausführung eines Schaltgerätes, kann ein unterschiedlich intensives Ein- bzw. Ausstrahlen von thermischer Energie in bzw. aus dem Schaltgerät erfolgen.

Um den Zustand des Schaltgerätes zu überwachen ist ein Sensor 9 an der ersten Kontaktierungsarmatur 4 befestigt. Die erste Kontaktierungsarmatur 4 trägt dabei den Sensor 9. Die Kontaktierungsarmatur 4 ist wiederum über die Schaltstelle 3 und über den Stützisolator 2 sowie über das Traggestell 1 abgestützt. Der Sensor 9 ist derart angeordnet, dass dieser zum einen von der ersten Kontaktierungsarmatur 4 überspannt ist. Zum anderen ist der Sensor 9 ebenso von der Freileitung 6, welche mit der ersten Kontaktierungsarmatur 4 kontaktiert ist, überspannt. Dadurch ist sowohl durch die Freileitung 6 als auch durch die erste Kontaktierungsarmatur 4 ein mechanischer Schutz bzw. ein mechanischer Überbau des Sensors 9 gegeben, wobei der Sensor 9 selbst von diesem mechanischen Überbau getragen ist. Der Sensor 9 ist dazu mit einer Anlagefläche der ersten Kontaktierungsarmatur 4, welche den Sensor 9 trägt, zugewandt und bevorzugt mit der ersten Kontaktierungsarmatur 4 winkelstarr verbunden. Eine von der ersten Kontaktierungsarmatur 4 sowie der Anlagefläche abgewandte Fläche des Sensors 9 ragt in Richtung des Erdpotentials, also in Richtung des Kraft aufnehmenden Traggestells 1. Dadurch ist neben einer mechanischen Schirmung des Sensors 9 durch die erste Kontaktierungsarmatur 4 bzw. die dort angeschlagene Freileitung 6 auch eine dielektrische Schirmung gewährleistet. Darüber hinaus kann dadurch die Ausrichtung des Sensors 9 nur noch eine bedingte Beeinflussung des elektrischen Feldes, welches sich um die Schaltstelle 3 herum einstellt, erfolgen. Alternativ oder zusätzlich kann ein Sensor 9 auch an der zweiten Kontaktierungsarmatur 5 angeordnet sein.

Bei dem Sensor 9 handelt es sich um einen energieautarken Sensor 9, das heißt, der Sensor 9 bezieht die zu seinem Betrieb notwendige elektrische Energie aus der Umgebung, in welcher der Sensor angeordnet ist. Bevorzugt kann es sich dabei um einen Sensor handeln, welcher in seiner Umgebung vorliegende thermische Energie in elektrische Energie wandelt und so eine elektrische Versorgung des Sensors 9 vornimmt. Dazu kann insbesondere die Anlagefläche des Sensors 9 genutzt werden, welche an der ersten Kontaktierungsarmatur 4 anliegt, so dass thermische Energie insbesondere dort in den Sensor 9 eingetragen und gewandelt werden kann. Darüber hinaus können jedoch auch weitere Sensoren Verwendung finden, die ebenfalls energieautark arbeiten. Bspw. kann durch eingestrahltes Licht bspw. atmosphärisches Licht oder ein Anstrahlen des Sensors 9 mittels Laserlicht eine drahtlose Einkoppelung von Energie zur Versorgung des Sensors 9 vorgenommen werden. Die im Sensor 9 erzeugte Energie wird zum Betrieb des Sensors 9 genutzt. Dabei weist der Sensor Erfassungsmittel auf, welche dem Erfassen einer physikalischen Größe, insbesondere bevorzugt einer Temperatur, aber auch einer Luftfeuchte, eines Luftdruckes, einer Windgeschwindigkeit, einer elektrischen und/oder mechanischen Spannung, eines Stromes, einer Beschleunigung, einer Lageänderung z. B. Neigung, usw. dient. Die von den Erfassungsmitteln ermittelten Informationen werden über eine drahtlose Abstrahleinheit des Sensors 9 abgestrahlt. Ein Abstrahlen der Informationen durch die Abstrahleinheit erfolgt in bevorzugter Strahlrichtung 16 zu einem Erdpotential, hier bevorzugt in Richtung des Traggestells 1. Alternativ kann auch zu einem Mast gestrahlt werden.

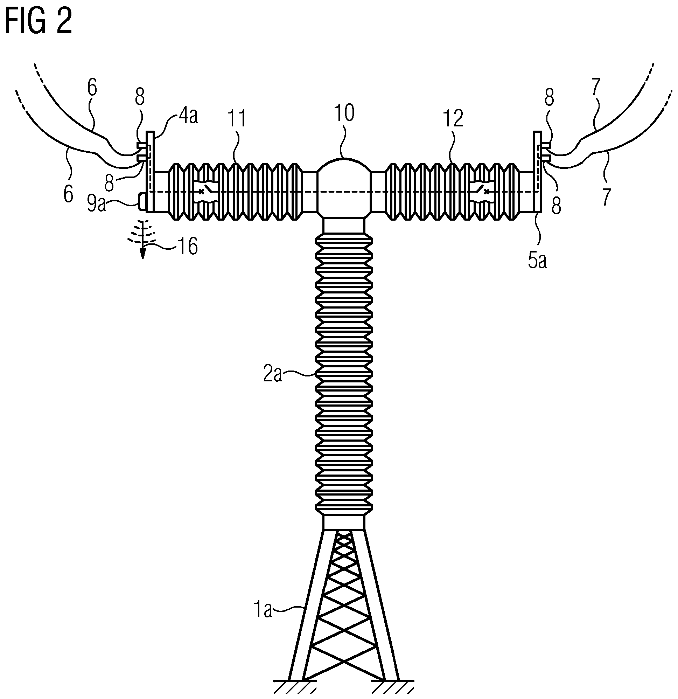

Die Figur 2 zeigt ein Schaltgerät in horizontaler Bauweise. Das Schaltgerät in horizontaler Bauweise weist wiederum ein Traggestell 1a auf, auf welchem ein Stützisolator 2a angeordnet ist. Am Stützisolator 2a, vom Traggestell 1a abgewandt, ist ein Verteilgehäuse 10 angeordnet, von welchem sich eine erste Schaltstelle 11 sowie eine zweite Schaltstelle 12 entgegengesetzt voneinander fortstrecken. Die beiden Schaltstellen 11, 12 weisen jeweils ein elektrisch isolierendes Gehäuse auf, welche im Wesentlichen hohl ausgebildet sind. Die Hohlachsen sind dabei in einer horizontalen Richtung ausgerichtet und befinden sich im Wesentlichen lotrecht zum vertikal ausgerichteten Stützisolator 2a des horizontalen Schaltgerätes. Die beiden Schaltstellen 11, 12 sind dabei elektrisch in Reihe verschaltet. Die elektrische Reihenschaltung erfolgt bevorzugt über das elektrisch leitende Verteilgehäuse 10. Als solches bildet das Verteilgehäuse 10 eine Kontaktierungsarmatur 10 aus, um die Schaltstellen 11, 12 miteinander zu verbinden. Das Verteilgehäuse 10 kann entsprechend dazu dienen, den Sensor 9a aufzunehmen. An den freien Enden, also stirnseitig an den Isoliergehäusen der Schaltstellen 11, 12, sind jeweils Kontaktierungsarmaturen 4a, 5a angeordnet. Die Kontaktierungsarmaturen 4a, 5a dienen dabei in analoger Weise zum Ausführungsbeispiel gemäß Figur 1 einer Kontaktierung der in Reihe geschalteten Schaltstellen 11, 12 mit Freileitungen 6, 7. Die Freileitungen 6, 7 sind analog zur Ausführung der Figur 1 mehradrig aufgebaut, so dass eine Verteilung des elektrischen Stromes auf mehrere Adern der Freileitungen 6, 7 erfolgen kann. Zur elektrischen Kontaktierung sind jeweils Bolzen 8 vorgesehen. Eine Ausführung einer Kontaktierung ist bspw. in der Figur 4 näher gezeigt. An einer Stirnseite des Isoliergehäuses der ersten Schaltstelle 11 ist an der ersten Kontaktierungsarmatur 4a ein Sensor 9a angeordnet. Der Sensor 9a ist dabei von der Freileitung 6, welche mit der ersten Kontaktierungsarmatur 4a elektrisch kontaktiert ist, überspannt. Des Weiteren ist der Sensor 9a von der ersten Kontaktierungsarmatur 4a abgeschattet, indem der Sensor 9a im Wesentlichen innerhalb der Hüllkontur der ersten Kontaktierungsarmatur 4a, insbesondere innerhalb der Hüllkontur der ersten Schaltstelle 11 befindlich angeordnet ist. Bezüglich der Verwendung oder Nutzung des Sensors 9a wird auf die Ausführungen zum vertikalen Schaltgerät gemäß Figur 1 verwiesen.

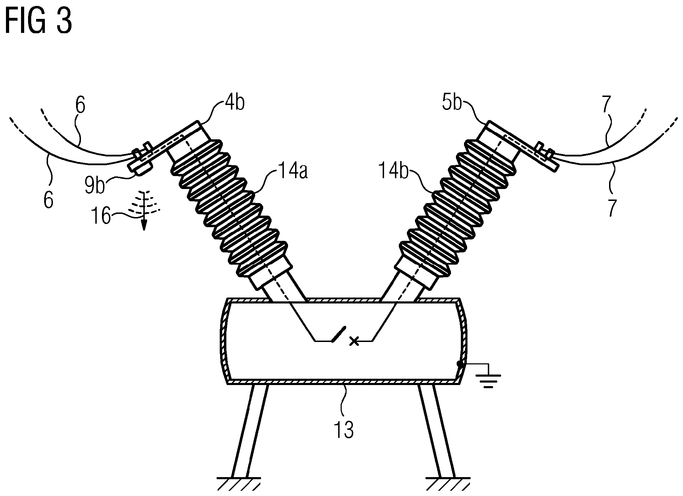

Die Figur 3 zeigt ein elektrisches Schaltgerät in Dead-Tank-Bauweise. Das elektrische Schaltgerät weist eine Schaltstelle 13 auf, welche von einem elektrisch leitenden Gehäuse 14 umgeben ist. Das elektrisch leitende Gehäuse 14 der Schaltstelle 13 ist mit Erdpotential beaufschlagt. Relativ zueinander bewegbare Schaltkontaktstücke der Schaltstelle 13 sind innerhalb des elektrisch leitfähigen Gehäuses der Schaltstelle 13 angeordnet. Um eine elektrisch isolierte Kontaktierung bzw. Einbindung eines Schaltgerätes in Dead-Tank-Bauweise vornehmen zu können, sind über Flanschstutzen Freiluftdurchführungen 14a, 14b vorgesehen. Die Freiluftdurchführungen 14a, 14b stellen elektrisch isolierende Gehäuse bereit, welche jeweils mit einem ersten Ende an einem Flanschstutzen angeschlagen sind. Mit den freien Enden der Freiluftdurchführungen 14a, 14b sind eine erste sowie eine zweite Kontaktierungsarmatur 4b, 5b verbunden. Im Innern der Freiluftdurchführungen 14a, 14b sind jeweils Phasenleiter angeordnet, welche von der Schaltstelle 13 elektrisch isoliert in die Umgebung des Schaltgerätes in Dead-Tank-Bauweise führen.An den freien Enden der Freiluftdurchführungen 14a, 14b sind die erste sowie die zweite Kontaktierungsarmatur 4b, 5b angeordnet. Über die Kontaktierungsarmaturen 4b, 5b sind Freileitungen 6, 7 mit der Schaltstelle 13 verbindbar. Die Freileitungen 6, 7 sind über Bolzen 8 elektrisch leitend mit der ersten sowie der zweiten Kontaktierungsarmatur 4b, 5b verbunden. An der ersten Kontaktierungsarmatur 4b ist ein Sensor 9b angeordnet. Der Sensor 9b ist dabei unterhalb der ersten Kontaktierungsarmatur 4b angeordnet, so dass der Sensor 9b im Wesentlichen von der ersten Kontaktierungsarmatur 4b sowie zusätzlich auch von der Freiluftleitung 6 überspannt ist. Die erste Kontaktierungsarmatur 4b schattet den Sensor 9b ab.

Um eine ausreichende Schlagweite zwischen den freien Enden der Freiluftdurchführungen 14a, 14b zu erhalten, sind die Freiluftdurchführungen 14a, 14b gegensinnig aus einer Vertikalen verkippt am elektrisch leitfähigen Gehäuse der Schaltstelle 13 angeordnet. Entsprechend wird die Schutzfunktion, welche durch die erste Kontaktierungsarmatur 4b sowie die Freileitung 6 erzielt wird, durch das Verkippen verstärkt. Die Abstrahlrichtung 16 des Sensors 9b ist dabei wiederum in Richtung Erdpotential ausgerichtet, so dass dort eine Empfangseinrichtung vereinfacht angeordnet werden kann. Bezüglich Ausführung, Verwendung und Funktion des Sensors 9b, wird auf die Ausführungen gemäß den Sensoren 9, 9a in den Ausführungsbeispielen nach Figuren 1 und 2 verwiesen.

In den Ausführungsbeispielen gemäß Figuren 1, 2 und 3 sind jeweils Kontaktierungsarmaturen 4, 4a, 4b, 5, 5a, 5b gezeigt. Die Kontaktierungsarmaturen 4, 4a, 4b, 5, 5a, 5b sind in den Figuren 4 und 5 perspektivisch gezeigt. Eine Kontaktierungsarmatur 4, 4a, 4b, 5, 5a, 5b ist einerseits elektrisch leitend mit der jeweiligen Schaltstelle 3, 11, 12, 13 des jeweiligen Schaltgerätes zu kontaktieren. Zur dielektrischen Stabilisierung weist die Kontaktierungsarmatur 4, 4a, 4b, 5, 5a, 5b dazu vier auf einer Kreisbahn angeordnete Ausnehmungen auf, durch welche mittels Bolzen eine elektrische Kontaktierung sowie mechanische Halterungen einer Kontaktierungsarmatur 4, 4a, 4b, 5, 5a, 5b an einem Schaltgeräte erfolgt. Durch eine Drehung auf der Kreisbahn ist eine geeignete Lage der Kontaktierungsarmatur 4, 4a, 4b, 5, 5a, 5b einstellbar.

Des Weiteren bilden die Kontaktierungsarmaturen 4, 4a, 4b, 5, 5a, 5b eine Lasche aus, in welcher mehrere Öffnungen angeordnet sind. Durch die Öffnungen sind Bolzen 8 hindurchführbar, an welche beispielsweise mittels Kabelschuhen 15 eine Freileitung 6 elektrisch leitend verbunden werden kann. Je nach Ausführung der Freileitung 6 können mehrere Adern der Freileitungen 6 auf die mehreren Öffnungen und dort angeordneten mehreren Bolzen 8 verteilt angeschlossen werden. An den ersten Kontaktierungsarmaturen 4, 4a, 4b ist jeweils ein Sensor 9, 9a, 9b angeordnet. Die Abstrahlcharakteristik einer Abstrahleinheit des Sensors 9, 9a, 9b ist dabei derart ausgerichtet, dass diese bevorzugt im Wesentlichen in Richtung Erdpotential strahlt.

In der Figur 4 ist beispielsweise die Verwendung eines Bolzens 8 sowie eines Kabelschuhes 15 für eine Ader einer Freileitung 6 gezeigt.

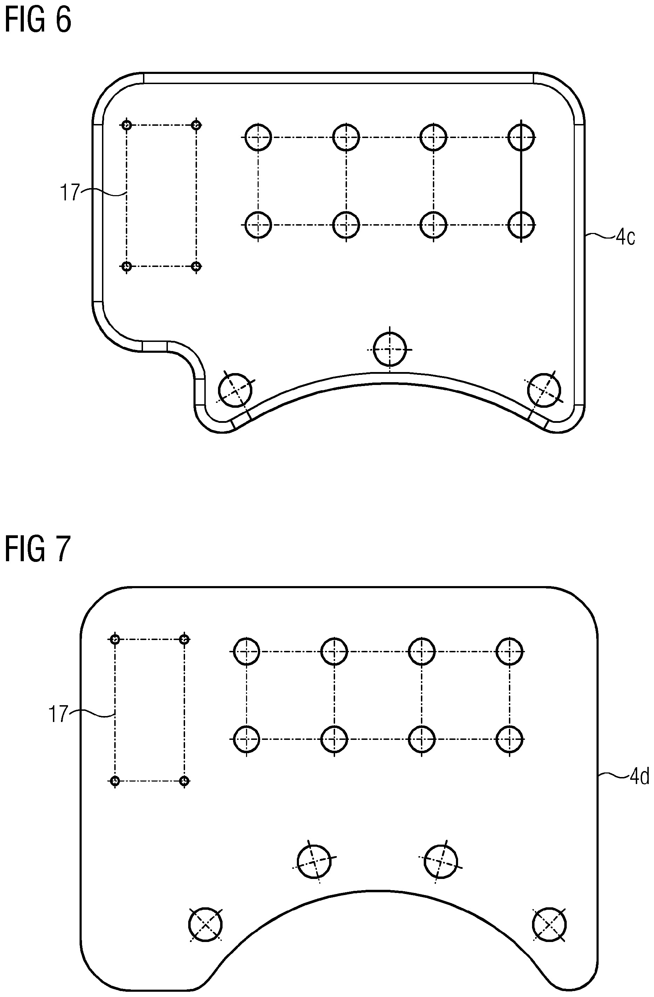

Die Figur 5 zeigt eine alternative perspektivische Ansicht der ersten Kontaktierungsarmatur 4, 4a, 4b, wie aus der Figur 4 bekannt. Der Sensor 9, 9a, 9b liegt mit einer Anlagefläche auf der ersten Kontaktierungsarmatur 4, 4a, 4b auf. Über die Kontaktierungsfläche des Sensors 9, 9a, 9b ist beispielsweise eine Abgabe bzw. eine Einleitung oder allgemein ein Übertritt thermischer Energie zwischen Sensor 9, 9a, 9b sowie erster Kontaktierungsarmatur 4, 4a, 4b ermöglicht. Je nach Einbaulage der ersten Kontaktierungsarmatur 4, 4a, 4b kann eine vollständige Überschattung bzw. Überdeckung oder Abschrankung des jeweiligen Sensors 9, 9a, 9b durch die erste Kontaktierungsarmatur 4, 4a, 4b erfolgen. Bedarfsweise kann die erste Kontaktierungsarmatur 4, 4a, 4b jedoch auch derart ausgebildet sein, dass der Sensor seitlich bzw. stirnseitig an einem Isoliergehäuse angeordnet ist (vgl. Figuren 6, 7). Unabhängig von der Anbaulage des Sensors 9, 9a, 9b bzw. der ersten Kontaktierungsarmatur 4, 4a, 4b sollte die erste Kontaktierungsarmatur 4, 4a, 4b über ein elektrisch isolierendes Gehäuse, beispielsweise einer Schaltstelle 3, 11, 12 oder einer Freiluftdurchführung 14a, 14b, gegenüber einem Erdpotential elektrisch isoliert angeordnet sein. Eine Informationsübertragung von dem Sensor 9, 9a, 9b durch eine Abstrahleinheit sollte bevorzugt in Richtung 16 des Erdpotentials erfolgen, gegenüber welchem die erste Kontaktierungsarmatur 4, 4a, 4b elektrisch isoliert gehalten ist.

Die in den Figuren 4 und 5 gezeigte Ausführungsvariante einer ersten Kontaktierungsarmatur 4, 4a, 4b weist eine im Wesentlichen ebene plattenartige Struktur auf. Es kann jedoch auch vorgesehen sein, dass die Ausnehmungen über welche die erste Kontaktierungsarmatur 4, 4a, 4b mechanisch mit dem Schaltgerät verbunden ist winkelig insbesondere lotrecht zu den mehreren Öffnungen zur elektrischen Kontaktierung mit einer Freileitung liegen. Beispielsweise kann dies durch eine winkliges zusammenfügen zweier diskreter Platten oder ein winkliges Abkanten oder einen winkligen Guss von Kontaktierungsarmaturen erfolgen. Die Winkelschenkel können dabei beispielsweise L-förmig oder T-förmig zueinander stehen. Durch eine winklige Ausführung einer Kontaktierungsarmatur kann je nach Aufstellungsort die gewünschte Art insbesondere hinsichtlich einer dielektrischen Abschattung des Sensors 9, 9a, 9b vorgenommen werden.

Die in den Figuren 6 und 7 gezeigten Kontaktierungsarmaturen 4c, 4d in der ersten und in der zweiten Abwandlung sind plattenartig ausgebildet. Die Kontaktierungsarmatur 4e in der dritten Abwandlung ist winkelig ausgebildet, wobei diese als Gussteil ausgebildet ist und mit einem kreisförmigen Sockel versehen ist.

Die Kontaktierungsarmatur 4c der ersten Abwandlung ist plattenartig ausgeführt, wobei eine Seite der Platte mit einer konkaven Formgebung versehen ist. Dadurch ist es möglich, mehrere Ausnehmungen auf einer Kreisbahn längs der konkaven Ausnehmung verteilt anzuordnen. Über die auf der Kreisbahn verteilt angeordneten Ausnehmungen kann die Kontaktierungsarmatur 4c der ersten Abwandlung beispielsweise mit einer mantelseitigen Schulter oder einem Bund, der entsprechend gekrümmt ist, zur Anlage gebracht werden und elektrisch kontaktiert werden. Somit ist es vereinfacht möglich, beispielsweise bereits vorhandene Abschnitte eines Schaltgerätes zu nutzen, um dort eine elektrische Kontaktierung einer Kontaktierungsarmatur 4c vorzunehmen. Weiterhin sind in der plattenartigen Fläche der Kontaktierungsarmatur 4c der ersten Abwandlung mehrere Öffnungen vorgesehen, um dort mittels Bolzen analog zu dem Ausführungsbeispiel nach Figuren 4 und 5 Freileitungen 6, 7 beispielsweise über Bolzen 8 und entsprechende Kabelschuhe elektrisch kontaktieren zu können.

Die Kontaktierungsarmatur 4c der ersten Abwandlung weist eine asymmetrische Ausformung auf, wobei sich die Asymmetrie bezüglich der Kreisbahn der Ausnehmungen am konvexen Abschnitt der Kontaktierungsarmatur 4c der ersten Abwandlung bezieht. In der asymmetrischen Zone, d. h. seitlich neben dem Feld mit den Öffnungen für die Bolzen ist eine Fläche 17 vorgesehen, auf welcher ein Sensor 9, 9a, 9b positioniert werden kann. Beispielsweise kann dazu ein Verschrauben des Sensors 9, 9a, 9b mit der Kontaktierungsarmatur 4c der ersten Abwandlung vorgesehen sein.

Die Figur 7 zeigt eine Kontaktierungsarmatur 4d in einer zweiten Abwandlung, wobei diese eine Fortbildung der aus der Figur 6 bekannten Kontaktierungsarmatur 4c der ersten Abwandlung ist. Um einen vergrößerten Kontaktierungsbereich für die Ausnehmungen zum Befestigen mit einem Schaltgerät zu erhalten, ist eine konvexe Kante an der im Wesentlichen plattenförmig rechteckigen Kontaktierungsarmatur 4d in der zweiten Abwandlung asymmetrisch in der Kante verteilt angeordnet. Analog ist auch das Feld mit den Öffnungen für die Bolzen zum Kontaktieren der Kontaktierungsarmatur 4d der zweiten Abwandlung asymmetrisch angeordnet. Im Vergleich zur Kontaktierungsarmatur 4c der ersten Abwandlung kann so eine vergrößerte Anzahl von Ausnehmungen zum Befestigen der Kontaktierungsarmatur 4d in der zweiten Abwandlung untergebracht werden. Analog zur Ausgestaltung der Kontaktierungsarmatur der ersten Abwandlung 4c ist auch bei der Kontaktierungsarmatur in der zweiten Abwandlung 4d die Positionierung eine rechteckige Fläche 17 vorgesehen, welche im asymmetrisch verbreiterten Bereich angeordnet ist.

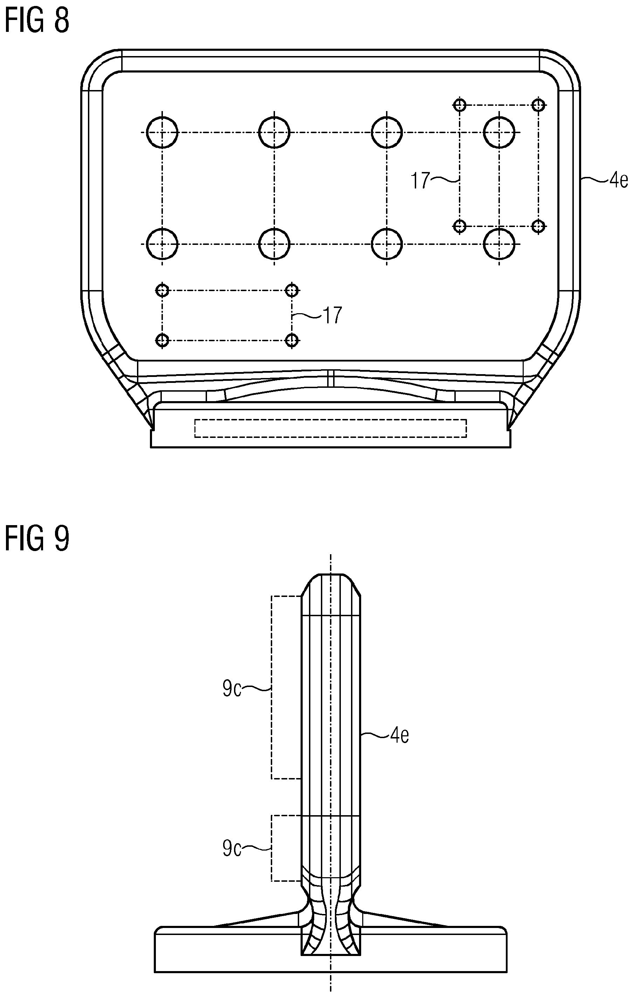

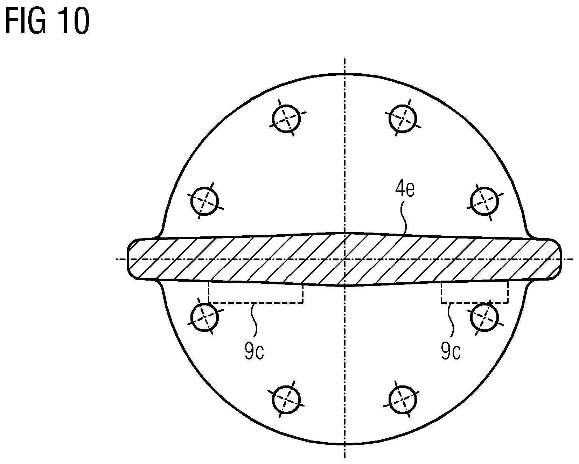

Die Figuren 8, 9 und 10 zeigen eine Kontaktierungsarmatur 4e in einer dritten Abwandlung. Die Kontaktierungsarmatur 4e weist eine im Wesentlichen rechteckige Anschlussplatte auf, in welcher Öffnungen zum Kontaktieren der Kontaktierungsarmatur 4e in der dritten Abwandlung untergebracht sind. Diese Anschlussplatte sitzt jedoch lotrecht auf einem Sockel auf, welcher auf einer Kreisbahn verteilt mehrere Ausnehmungen zum Kontaktieren der Kontaktierungsarmatur 4e in dritter Abwandlung aufweist. Beispielsweise ist eine derartige Kontaktierungsarmatur 4e in dritter Abwandlung stirnseitig auf eine Freiluftdurchführung aufsetzbar. Durch eine derartige winklige Anordnung von Anschlussplatte sowie Sockel ist eine verbesserte Abschattung der zur Aufnahme eines Sensors 9c vorgesehenen Flächen 17 ermöglicht. Zwischen dem Sockel sowie der Anschlussplatte ist ein Winkel eingeschlossen, welcher auf Grund der elektrisch leitfähigen Eigenschaften der Kontaktierungsarmatur 4e in der dritten Abwandlung zumindest teilweise eine dielektrische Schirmung des Sensors 9c ermöglicht. Beispielhaft ist in der Figur 8 gezeigt, dass ein Sensor nahe dem Ursprung des Winkelscheitels positioniert werden kann. Es kann jedoch auch vorgesehen sein, dass ein Sensor 9c beabstandet zum Winkelscheitel beispielsweise in Höhe der Öffnungen zur Aufnahme der Bolzen zur Kontaktierung mit Freileitungen angeordnet sein kann. Im Sockel liegende Ausnehmungen zum Kontaktieren oder zum Befestigen der Kontaktierungsarmatur 4e in der dritten Abwandlung 7 können analog zu der in den Figuren 4 und 5 beschriebenen Kreisbahn (dort mit vier Öffnungen) liegen. So besteht auch hier die Möglichkeit einer Wahl der Ausrichtung der Kontaktierungsarmatur 4e in dritter Abwandlung.

Die in den Figuren 4, 5, 6, 7, 8, 9 und 10 gezeigten Kontaktierungsarmaturen 4, 4a, 4b, 4c, 4d, 4e sind untereinander austauschbar und an verschiedenen Schaltgeräten verwendbar. So ist es insbesondere möglich, die in den Figuren 8, 9, 10 gezeigte Kontaktierungsarmatur 4e in der dritten Ausgestaltungsvariante bei dem Schaltgerät in Dead-Tank-Bauweise, wie in der Figur 3 gezeigt, zur Anwendung zu bringen. Dort ist durch eine entsprechende Rotation des Sockels der Kontaktierungsarmatur 4e in der dritten Abwandlung eine geeignete dielektrische sowie mechanische Schirmung des Sensors 9b auf den schräg stehenden Freiluftdurchführungen 14a, 14b ermöglicht.

## Patentansprüche

1. Schaltgerät mit einer Schaltstelle (3, 11, 12, 13) sowie einem Sensor (9, 9a, 9b, 9c) zur Zustandsüberwachung des Schaltgerätes,
**dadurch gekennzeichnet, dass** das Schaltgerät eine einen Zugang zu der Schaltstelle (3, 11, 12, 13) des Schaltgerätes ermöglichende Kontaktierungsarmatur (4, 4a, 4b, 5, 5a, 5b, 10) aufweist, die Kontaktierungsarmatur (4, 4a, 4b, 5, 5a, 5b, 10) mit der Schaltstelle (3, 11, 12, 13) elektrisch kontaktiert und Teil eines zu schaltenden Strompfades ist und der Sensor (9, 9a, 9b, 9c) von der Kontaktierungsarmatur (4, 4a, 4b, 4c, 4d, 4e, 5, 5a, 5b, 10) getragen ist, wobei der Sensor (9, 9a, 9b, 9c) auf einer Fläche der Kontaktierungsarmatur (4, 4a, 4b, 4c, 4d, 4e, 5, 5a, 5b, 10) aufliegt und mit dieser in thermischer Verbindung steht.

2. Schaltgerät nach Anspruch 1,
**dadurch gekennzeichnet, dass** der Sensor (9, 9a, 9b, 9c) durch die Kontaktierungsarmatur (4, 4a, 4b, 4c, 4d, 4e, 5, 5a, 5b, 10) zumindest teilweise abgeschattet ist.

3. Schaltgerät nach Anspruch 1 oder Anspruch 2,
**dadurch gekennzeichnet, dass** der Sensor (9, 9a, 9b, 9c) mit einer Anlagefläche an der Kontaktierungsarmatur (4, 4a, 4b, 4c, 4d, 4d, 10) anliegt und mit einer von der Anlagefläche abgewandten Fläche in Richtung eines Erdpotentiales fort ragt.

4. Schaltgerät nach einem der Ansprüche 1 bis 3,
**dadurch gekennzeichnet, dass** der Sensor (9, 9a, 9b, 9c) ein energieautarker Sensor (9, 9a, 9b) ist.

5. Schaltgerät nach einem der Ansprüche 1 bis 4,
**dadurch gekennzeichnet, dass** der Sensor (9, 9a, 9b, 9c) eine drahtlose Abstrahleinheit aufweist, deren Strahlrichtung in Richtung eines Erdpotentials zeigt.

6. Schaltgerät nach einem der Ansprüche 1 bis 5,
**dadurch gekennzeichnet, dass** der Sensor (9, 9a, 9b, 9c) seitlich an einer Kontaktierungsarmatur (4a, 4b, 4c, 4d, 4e, 5, 5a, 5b, 10) angeordnet ist.

7. Schaltgerät nach einem der Ansprüche 1 bis 6,
**dadurch gekennzeichnet, dass** das Schaltgerät ein Freiluftschaltgerät ist.

8. Schaltgerät nach einem der Ansprüche 1 bis 7,
**dadurch gekennzeichnet, dass** der Sensor (9, 9a, 9b, 9c) von einer Freileitung (6, 7) überspannt ist, welche an der Kontaktierungsarmatur (4, 4a, 4b, 4c, 4d, 4e, 5, 5a, 5b, 10) angeschlagen ist.

9. Schaltgerät nach einem der Ansprüche 1 bis 8,
**dadurch gekennzeichnet, dass** der Sensor (9, 9a, 9b, 9c) von der Kontaktierungsarmatur (4, 4a, 4b, 4c, 4d, 4e, 5, 5a, 5b, 10) zumindest teilweise überspannt ist.

10. Schaltgerät nach einem der Ansprüche 1 bis 9,
**dadurch gekennzeichnet, dass** der Sensor (9, 9a, 9b, 9c) eine thermisch reflektierende Oberflächengestalt aufweist.

11. Schaltgerät nach einem der Ansprüche 1 bis 10,
**dadurch gekennzeichnet, dass** der Sensor (9, 9a, 9b, 9c) stirnseitig an einem Schaltgerät angeordnet ist.

## Claims

1. Switching unit having a switching point (3, 11, 12, 13) and a sensor (9, 9a, 9b, 9c) for monitoring the state of the switching unit,
**characterized in that**
the switching unit has a contact fitting (4, 4a, 4b, 5, 5a, 5b, 10) that enables access to the switching point (3, 11, 12, 13) of the switching unit, the contact fitting (4, 4a, 4b, 5, 5a, 5b, 10) is electrically contact-connected to the switching point (3, 11, 12, 13) and is part of a current path to be switched, and the sensor (9, 9a, 9b, 9c) is carried by the contact fitting (4, 4a, 4b, 4c, 4d, 4e, 5, 5a, 5b, 10), wherein the sensor (9, 9a, 9b, 9c) bears on a surface of the contact fitting (4, 4a, 4b, 4c, 4d, 4e, 5, 5a, 5b, 10) and is thermally linked thereto.

2. Switching unit according to Claim 1,
**characterized in that**
the sensor (9, 9a, 9b, 9c) is at least partially masked by the contact fitting (4, 4a, 4b, 4c, 4d, 4e, 5, 5a, 5b, 10).

3. Switching unit according to Claim 1 or Claim 2,
**characterized in that**
the sensor (9, 9a, 9b, 9c) bears on the contact fitting (4, 4a, 4b, 4c, 4d, 4e, 10) with a bearing surface and protrudes in the direction of a ground potential with a surface facing away from the bearing surface.

4. Switching unit according to one of Claims 1 to 3,
**characterized in that**
the sensor (9, 9a, 9b, 9c) is an energy-self-sufficient sensor (9, 9a, 9b).

5. Switching unit according to one of Claims 1 to 4,
**characterized in that**
the sensor (9, 9a, 9b, 9c) has a wireless radiation unit whose radiation direction points in the direction of a ground potential.

6. Switching unit according to one of Claims 1 to 5,
**characterized in that**
the sensor (9, 9a, 9b, 9c) is arranged laterally on a contact fitting (4a, 4b, 4c, 4d, 4e, 5, 5a, 5b, 10).

7. Switching unit according to one of Claims 1 to 6,
**characterized in that**
the switching unit is an outdoor switching unit.

8. Switching unit according to one of Claims 1 to 7,
**characterized in that**
the sensor (9, 9a, 9b, 9c) is spanned by an overhead line (6, 7) that is fastened to the contact fitting (4, 4a, 4b, 4c, 4d, 4e, 5, 5a, 5b, 10).

9. Switching unit according to one of Claims 1 to 8,
**characterized in that**
the sensor (9, 9a, 9b, 9c) is at least partially spanned by the contact fitting (4, 4a, 4b, 4c, 4d, 4e, 5, 5a, 5b, 10).

10. Switching unit according to one of Claims 1 to 9,
**characterized in that**
the sensor (9, 9a, 9b, 9c) has a thermally reflective surface structure.

11. Switching unit according to one of Claims 1 to 10,
**characterized in that**
the sensor (9, 9a, 9b, 9c) is arranged on an end face on a switching unit.

## Revendications

1. Appareil de coupure ayant un point (3, 11, 12, 13) de coupure ainsi qu'un capteur (9, 9a, 9b, 9c) pour le contrôle d'état de l'appareil de coupure,
**caractérisé en ce que**
l'appareil de coupure a une armature (4, 4a, 4b, 5, 5a, 5b, 10) de mise en contact permettant un accès au point (3, 11, 12, 13) de coupure de l'appareil de coupure,
l'armature (4, 4a, 4b, 5, 5a, 5b, 10) de mise en contact est en contact électriquement avec le point (3, 11, 12, 13) de coupure et fait partie d'un chemin de courant à couper et le capteur (9, 9a, 9b, 9c) est porté par l'armature (4, 4a, 4b, 4c, 4d, 4e, 5, 5a, 5b, 10) de mise en contact, dans lequel le capteur (9, 9a, 9b, 9c) est posé sur une surface de l'armature (4, 4a, 4b, 4c, 4d, 4e, 5, 5a, 5b, 10) de mise en contact et est en liaison thermique avec celle-ci.

2. Appareil de coupure suivant la revendication 1,
**caractérisé en ce que**
le capteur (9, 9a, 9b, 9c) est occulté au moins en partie par l'armature (4, 4a, 4b, 4c, 4d, 4e, 5, 5a, 5b, 10) de mise en contact.

3. Appareil de coupure suivant la revendication 1 ou la revendication 2,
**caractérisé en ce que**
le capteur (9, 9a, 9b, 9c) s'applique par une surface d'application à l'armature (4, 4a, 4b, 4c, 4d, 4d, 10) de mise en contact et fait saillie en direction d'un potentiel de terre par une surface non tournée vers la surface d'application.

4. Appareil de coupure suivant l'une des revendications 1 à 3,
**caractérisé en ce que**
le capteur (9, 9a, 9b, 9c) est un capteur (9, 9a, 9b) autarcique en énergie.

5. Appareil de coupure suivant l'une des revendications 1 à 4,
**caractérisé en ce que**
le capteur (9, 9a, 9b, 9c) a une unité de rayonnement sans fil, dont la direction de rayonnement pointe en direction d'un potentiel de terre.

6. Appareil de coupure suivant l'une des revendications 1 à 5,
**caractérisé en ce que**
le capteur (9, 9a, 9b, 9c) est monté latéralement sur une armature (4a, 4b, 4c, 4d, 4e, 5, 5a, 5b, 10) de mise en contact.

7. Appareil de coupure suivant l'une des revendications 1 à 6,
**caractérisé en ce que**
l'appareil de coupure est un appareil de coupure à l'air libre.

8. Appareil de coupure suivant l'une des revendications 1 à 7,
**caractérisé en ce que**
le capteur (9, 9a, 9b, 9c) est enjambé par une ligne (6, 7) aérienne, qui est clouée sur l'armature (4, 4a, 4b, 4c, 4d, 4e, 5, 5a, 5b, 10) de mise en contact.

9. Appareil de coupure suivant l'une des revendications 1 à 8,
**caractérisé en ce que**
le capteur (9, 9a, 9b, 9c) est enjambé au moins en partie par l'armature (4, 4a, 4b, 4c, 4d, 4e, 5, 5a, 5b, 10) de mise en contact.

10. Appareil de coupure suivant l'une des revendications 1 à 9,
**caractérisé en ce que**
le capteur (9, 9a, 9b, 9c) a une conformation de surface réfléchissante thermiquement.

11. Appareil de coupure suivant l'une des revendications 1 à 10,
**caractérisé en ce que**
le capteur (9, 9a, 9b, 9c) est disposé du côté frontal sur un appareil de coupure.
